(19) Europäisches Patentamt
European Patent Office
Office européen des brevets

(11) EP 0 877 974 B1

(12) **EUROPÄISCHE PATENTSCHRIFT**

(45) Veröffentlichungstag und Bekanntmachung des Hinweises auf die Patenterteilung:
**17.05.2000 Patentblatt 2000/20**

(21) Anmeldenummer: **97908126.2**

(22) Anmeldetag: **28.01.1997**

(51) Int Cl.⁷: **G05B 13/02**

(86) Internationale Anmeldenummer:
**PCT/DE97/00152**

(87) Internationale Veröffentlichungsnummer:
**WO 97/28492 (07.08.1997 Gazette 1997/34)**

# (54) VERFAHREN ZUR REGELUNG EINER REGELSTRECKE, INSBESONDERE EINER BRENNKRAFTMASCHINE

METHOD OF CONTROLLING A CONTROLLED SYSTEM, IN PARTICULAR AN INTERNAL-COMBUSTION ENGINE

PROCEDE POUR REGULER UN SYSTEME ASSERVI, NOTAMMENT UN MOTEUR A COMBUSTION INTERNE

(84) Benannte Vertragsstaaten:
**DE FR GB SE**

(30) Priorität: **29.01.1996 DE 19603091**

(43) Veröffentlichungstag der Anmeldung:
**18.11.1998 Patentblatt 1998/47**

(73) Patentinhaber: **SIEMENS AKTIENGESELLSCHAFT**
**80333 München (DE)**

(72) Erfinder:
- **HARTKE, Andreas**
  **D-93049 Regensburg (DE)**
- **PRZYMUSINSKI, Achim**
  **D-93053 Regensburg (DE)**
- **HEINITZ, Dirk**
  **D-93143 Schönhofen (DE)**

(56) Entgegenhaltungen:
**GB-A- 2 111 253**

- **PATENT ABSTRACTS OF JAPAN vol. 5, no. 205 (E-088), 25.Dezember 1981 & JP 56 125989 A (JAPANESE NATIONAL RAILWAYS), 2.Oktober 1981,**
- **PATENT ABSTRACTS OF JAPAN vol. 10, no. 271 (P-497), 16.September 1986 & JP 61 094110 A (NISSAN MOTOR CO), 13.Mai 1986,**
- **PATENT ABSTRACTS OF JAPAN vol. 10, no. 140 (P-458), 25.Mai 1986 & JP 60 258607 A (NISSAN JIDOSHA KK), 20.Dezember 1985,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 877 974 B1

## Beschreibung

Die Erfindung betrifft ein Verfahren zur Regelung einer Regelstrecke gemäß dem Oberbegriff des Anspruchs 1.

Aus der Patentanmeldung EP 0 176 323 A2 ist es bereits bekannt, ein PID-Regelverfahren, das ein proportionales, integrales und differentiales Verhalten aufweist, zur Regelung einer Dieseleinspritzung zu verwenden. Dabei ist das PID-Regelverfahren in seiner Funktionsweise auf die zu regelnde Motorfunktion, die nicht linear ist, abgestimmt. Die Folge davon ist, daß das PID-Regelverfahren nur für die Motorfunktion verwendet werden kann, für die das PID-Regelverfahren entworfen worden ist.

Aus dem Dokument JP-A-60 258 607 ist weiterhin ein Regelverfahren bekannt in dem aus der Differenz zwischen einem ermittelten Istwert und einem Sollwert, ein Stellwert berechnet wird. Dieser Stellwert wird mit einem Korrekturwert zur Kompensation der Nicht-linearität der Regelstrecke bewertet.

Die Aufgabe der Erfindung beruht darin, ein Regelverfahren anzugeben, bei dem eine einfache Anpassung an verschiedene Regelstrecken, insbesondere Motorfunktionen, möglich ist.

Die Aufgabe der Erfindung wird durch die Merkmale des Anspruchs 1 gelöst.

Weitere vorteilhafte Ausbildungen und Verbesserungen der Erfindung sind in den Unteransprüchen angegeben.

Die Erfindung wird anhand der Figuren näher erläutert; es zeigen:

Figur 1 eine schematische Darstellung des Regelverfahrens,
Figur 2 ein Linearisierungsdiagramm, und
Figur 3 einen speziellen Aufbau der Regelung.

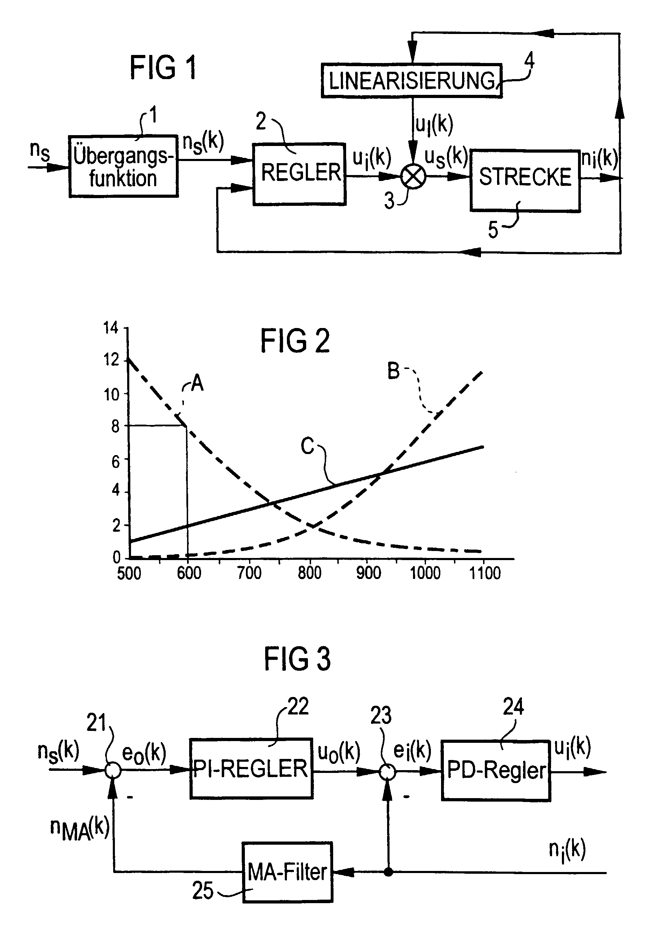

Anhand der Figur 1 wird im folgenden die Erfindung an dem Beispiel der Regelung der Solldrehzahl einer Brennkraftmaschine beschrieben, wobei jedoch die Erfindung für die Regelung beliebiger Funktionen einer Regelstrecke, insbesondere einer Brennkraftmaschine, einsetzbar ist. Im folgenden sind die verwendeten Werte in Abhängigkeit von einem Zeittakt k, zu dem die Werte abgetastet werden, angegeben.

In Figur 1 wird eine Solldrehzahl ns, die von einem Kennfeld vorgegeben ist, bei Programmpunkt 1 zur Berechnung einer Übergangsfunktion verwendet, bei der eine verzögerte Solldrehzahl ns(k) für den Zeittakt k berechnet wird. Die verzögerte Solldrehzahl ns(k) wird anschließend bei Programmpunkt 2 zur Berechnung eines Regelverfahrens verwendet. Aus der verzögerten Solldrehzahl ns(k) wird unter Verwendung einer zylinderselektiven Drehzahl ni (k) ein Stellwert ui(k) berechnet. Der Stellwert ui(k) wird bei Programmpunkt 3 mit einem Linearisierungsfaktor ul(k) multipliziert und so eine Stellgröße us(k) berechnet, die bei Programmpunkt 5 der Regelstrecke vorgegeben wird.

Die Stellgröße bezeichnet in diesem Ausführungsbeispiel eine Kraftstoffmasse, die der Brennkraftmaschine eingespritzt wird. Bei dem beschriebenen Ausführungsbeispiel wird die Drehzahl jedes Zylinders der Brennkraftmaschine gemessen und die zylinderselektive Drehzahl ni(k) als Zustandsgröße der Regelstrecke bei Programmpunkt 2 zur Ermittlung des Stellwertes ui(k) verwendet. Weiterhin wird die zylinderselektive Drehzahl ni(k) bei Programmpunkt 4 dazu verwendet, um aus einer abgelegten Tabelle einen Linearisierungsfaktor ul(k) auszuwählen, mit dem bei Programmpunkt 3 der Stellwert ui(k) multipliziert wird.

Die Erfindung beruht darauf, daß das Verfahren zur Regelung der Regelstrecke 5, insbesondere eine Brennkraftmaschine, in eine Regelung, die bei Programmpunkt 2 ermittelt wird, und in eine Linearisierung, die bei Programmpunkt 4 durchgeführt wird, aufgeteilt ist. Auf diese Weise ist es möglich, daß das Regelverfahren 2 so vorgegeben wird, als würde die Regelstrecke 5 ein lineares Regelverhalten aufweisen. Das nichtlineare Verhalten der Regelstrecke 5 wird durch die Linearisierung 4 berücksichtigt. Dadurch wird erreicht, daß das Regelverfahren 2 für verschiedene Regelstrekken anwendbar ist, wobei das unterschiedliche nichtlineare Verhalten der verschiedenen Regelstrecken 5 durch verschiedene Linearisierungen 4 berücksichtigt wird. Ein und dasselbe Regelverfahren 2 kann somit für verschiedene Regelstrecken 5 eingesetzt werden, wobei jedoch für jede Regelstrecke 5 eine Linearisierung 4 erstellt werden muß. Durch die Linearisierung 4 zeigt die Zustandsgröße ni(k) der Regelstrecke 5, die beim Regelverfahren 2 berücksichtigt wird, ein lineares Regelverhalten.

Figur 2 zeigt über die Drehzahl n aufgetragen eine Linearisierungskennlinie A, eine Wirkungsgradkennlinie B, die in Abhängigkeit von der Drehzahl n den differentiellen Wirkungsgrad ($\Delta\varepsilon : \Delta n$) darstellt, und eine Effektivkennlinie C, die das lineare Regelverhalten der Regelstrecke 5 darstellt. Aus dem Verlauf der Wirkungsgradkennlinie B ist ersichtlich, daß der differentielle Wirkungsgrad $\varepsilon$ der Brennkraftmaschine in dem dargestellten Bereich mit zunehmender Drehzahl zunimmt. Unter Wirkungsgrad ist das Verhältnis von eingesetzter Energie (Kraftstoff) zu erhaltener Energie (Antriebsenergie) am Beispiel der Brennkraftmaschine zu verstehen.

Damit weist die Brennkraftmaschine, die die Regelstrecke 5 darstellt, ein nichtlineares Verhalten über den dargestellten Drehzahlbereich auf. Um das Regelverhalten der Regelstrecke 5 auf ein lineares Regelverhalten abzubilden, wird die Linearisierungskennlinie A ermittelt, mit der die Wirkungsgradkennlinie B multipliziert wird und als

Ergebnis die lineare Effektivkennlinie C erhalten wird.

Die Effektivkennlinie C stellt bei Verwendung der Linearisierungskennlinie A das Regelverhalten der Regelstrecke 5 dar. Für die Regelung 2 weist die Regelstrecke 5 somit ein lineares Regelverhalten auf. Für verschiedene nichtlineare Regelverhalten werden entsprechend verschiedene Linearisierungskennlinien A ermittelt, die das nichtlineare Regelverhalten in ein lineares Regelverhalten überführen. Die Linearisierungskennlinie A wird experimentell ermittelt und ist in einem Speicher abgelegt.

Figur 3 zeigt eine Ausführung des Regelverfahrens 2. Das Regelverfahren 2 weist einen Programmpunkt 21 auf, bei dem von der verzögerten Solldrehzahl ns(k) eine gemittelte Drehzahl nMA(k) subtrahiert wird und als Ergebnis ein erster Eingangswert eo(k) erhalten wird. Der erste Eingangswert eo(k) wird bei Programmpunkt 22 einem proportionalen und integralen Regelverfahren (PI-Regler) unterworfen und als Ergebnis ein Ausgangswert uo(k) erhalten, von dem bei Programmpunkt 23 die zylinderselektive Drehzahl ni(k) subtrahiert wird und ein zweiter Eingangswert ei (k) erhalten wird. Der zweite Eingangswert ei(k) wird bei Programmpunkt 24 einem proportionalen und differentialen Regelverfahren (PD-Regler) unterworfen und als Ergebnis der Stellwert ui(k) ermittelt, der anschließend bei Programmpunkt 3, wie in Figur 1 dargestellt, weiterverarbeitet wird. Die zylinderselektive Drehzahl ni(k) wird beim Programmpunkt 25 einer Mittelwertfilterung unterzogen und als Ausgangswert die gemittelte Drehzahl nMA(k) erhalten.

Anhand der Figuren 1 bis 3 wird im folgenden das erfindungsgemäße Verfahren näher erläutert: In Abhängigkeit von verschiedenen Betriebszuständen der Brennkraftmaschine 5 wird aus einem Speicher eine Solldrehzahl ns ausgelesen und bei Programmpunkt 1 die Übergangsfunktion:

$$ns(k)=\alpha ns + (1-\alpha)ns(k-1)$$

berechnet, wobei mit $\alpha$ eine Verzögerungszeit, die beispielsweise 0,1 Sekunden beträgt, mit ns(k) die verzögerte Solldrehzahl zum Zeitpunkt k und mit ns(k-1) die verzögerte Solldrehzahl zum Zeitpunkt k-1 bezeichnet ist.

Die Übergangsfunktion ermöglicht ein verbessertes Einschwingverhalten des Regelverfahrens bei einem Wechsel von einem nichtgeregelten Bereich in einen geregelten Bereich oder beim Wechsel von einem geregelten Bereich in einen nichtgeregelten Bereich. Dieser Übergang wird durch eine zeitliche Verzögerung und Anpassung der Größe der Solldrehzahl ns realisiert. Die explizit dargestellte Übergangsfunktion weist ein Verzögerungsglied erster Ordnung auf, wobei jedoch auch Verzögerungsglieder höherer Ordnung verwendet werden können.

Bei Programmpunkt 2 wird, wie in Figur 3 dargestellt, aus der verzögerten Solldrehzahl ns(k) und der zylinderselektiven Drehzahl ni(k) der Stellwert ui(k) berechnet. Die einzelnen Verfahrensschritte der Regelung 2 sind in Figur 3 dargestellt. Von der verzögerten Solldrehzahl ns(k) wird bei Programmpunkt 21 die gemittelte Drehzahl nMA (k) subtrahiert und der erste Eingangswert eo(k) erhalten.

Bei Programmpunkt 25 wird aus der zylinderselektiven Drehzahl ni(k) eine gemittelte Drehzahl nMA(k) nach folgender Formel berechnet:

$$nMA(k) = \frac{1}{Z} * \sum_{j=0}^{Z-1} ni(k-j)\ ,$$

wobei

Z eine vorgegebene Anzahl von Abtastwerten, z.B. sechs, darstellt, über die die zylinderselektive Drehzahl ni gemittelt wird.

Die Subtraktion bei Programmpunkt 21 wird durch folgende Formel durchgeführt:

$$eo(k) = ns(k) - nMA(k).$$

Der erste Eingangswert eo(k) wird bei Programmpunkt 22 einer proportionalen und integralen Regelung (PI-Regler) unterworfen, bei der durch folgende Formel ein erster Ausgangswert uo(k) berechnet wird:

$$uo(k) = uo(k-1) \div K0 * \left[ eo(k) - (1 - \frac{Ta}{Tn}) eo(k-1) \right],$$

wobei

K0 einen Verstärkungsfaktor darstellt, der beispielsweise 0,9 beträgt,
Ta die Abtastzeit darstellt, mit der die zylinderselektive Drehzahl ni(k) abgetastet wird und
Tn eine Nachstellzeit darstellt, die beispielsweise 30 mSec beträgt.

Von dem ersten Ausgangswert uo(k) wird bei Programmpunkt 23 die zylinderselektive Drehzahl ni(k) nach folgender Formel subtrahiert: ei(k) = uo(k) - ni(k).

Der somit erhaltene zweite Eingangswert ei(k) wird bei Programmpunkt 24 dem folgenden proportionalen und differentialen Regelverfahren unterzogen:

$$ui(k) = Ki * \left[ ei(k) - \frac{Tv}{Ta}\left(ei(k) - ei(k-1)\right) \right],$$

wobei
Ki einen zweiten Verstärkungsfaktor, der beispielsweise 0,0025 beträgt, Tv eine Vorhaltezeit, die beispielsweise 400 mSek beträgt und Ta die Abtastzeit darstellt. Der auf diese Weise berechnete Stellwert ui(k) wird anschließend bei Programmpunkt 3 mit dem Linearisierungsfaktor ul(k) nach folgender Formel multipliziert: us(k)= ui(k)*ul(k).

Die bei Programmpunkt 3 berechnete Stellgröße us(k) wird z.B. in Form einer einzuspritzenden Kraftstoffmasse der Brennkraftmaschine bei Programmpunkt 5 zugeführt und die zylinderselektive Drehzahl ni(k) gemessen.

Aus der zylinderselektiven Drehzahl ni(k) wird bei Programmpunkt 4 anhand der Linearisierungskennlinie A ein Linearisierungsfaktor ul(k) ermittelt. Beispielsweise wird bei einer zylinderselektiven Drehzahl ni(k) von 600 Umdrehungen pro Minute ein Linearisierungsfaktor ul(k) von 8 aus Figur 2 ausgelesen, mit dem bei Programmpunkt 3 der Stellwert ui(k) multipliziert wird und die Stellgröße us(k) erhalten wird, die der Regelstrecke 5 zugeführt wird. Mit der Stellgröße us(k) wird eine Brennkraftmenge festgelegt, die der Brennkraftmaschine zugeführt wird.

## Patentansprüche

**1.** Verfahren zur Regelung einer Regelstrecke (5) mit folgenden Merkmalen:
eine Zustandsgröße (ni(k)) der Regelstrecke (5) wird ermittelt;

- die Zustandsgröße (ni(k)) wird mit einer Sollgröße (ns(k)) verglichen und aus der Differenz ein Stellwert (ui (k)) ermittelt (2);
- der Stellwert (ui(k)) wird mit einem Korrekturwert (ul(k)) bewertet (3), der in Abhängigkeit von der Zustandsgröße (ni(k)) der Regelstrecke (5) derart gewählt ist, daß eine Bewertung des Stellwertes (ui(k)) mit dem Korrekturwert (ul(k)) zu einem linearen Regelverhalten der Regelstrecke (5) führt;
- der bewertete Stellwert (us(k)) wird der Regelstrecke (5) zugeführt, dadurch gekennzeichnet, daß der Vergleich der Zustandsgröße mit der Sollgröße und die Ermittlung des Stellwertes folgende Verfahrensschritte umfaßt:
- Von der Sollgröße (ns(k)) wird die Zustandsgröße (ni(k)) subtrahiert und ein erster Eingangswert (eo(k)) erhalten;
- der erste Eingangswert (eo(k)) wird einem proportionalen und integralen Regelverfahren (22) unterzogen und ein Ausgangswert (uo(k)) ermittelt;
- von dem Ausgangswert (uo(k)) wird die Zustandsgröße (ni(k)) subtrahiert (23) und ein zweiter Eingangswert (ei(k)) erhalten, der einem proportionalen und differentialen Regelverfahren (24) unterzogen wird und auf diese Weise der Stellwert (ui(k)) berechnet wird.

**2.** Verfahren nach Anspruch 1, dadurch gekennzeichnet, daß der Stellwert (ui(k)) mit dem Korrekturwert (ul(k)) multipliziert wird.

**3.** Verfahren nach Anspruch 1, dadurch gekennzeichnet, daß die Zustandsgröße (ni(k)) zeitlich gemittelt wird (25), bevor sie von der Sollgröße (ns(k)) subtrahiert wird.

**4.** Verfahren nach Anspruch 1, dadurch gekennzeichnet, daß als Sollgröße eine zeitlich verzögerte Sollgröße verwendet wird.

**5.** Verfahren nach Anspruch 1, dadurch gekennzeichnet, daß als proportionales und integrales Regelverfahren (22)

folgende Funktion verwendet wird:

$$uo(k) = uo(k-1) + K0 * \left[ eo(k) - (1 - \frac{Ta}{Tn}) eo(k-1) \right],$$

wobei K0 einen Verstärkungsfaktor, Ta eine Abtastzeit und Tn eine Nachstellzeit darstellt.

**6.** Verfahren nach Anspruch 1, dadurch gekennzeichnet, daß als proportionales und differentiales Regelverfahren (24) folgende Funktion verwendet wird:

$$ui(k) = Ki * \left[ ei(k) - \frac{Tv}{Ta} (ei(k) - ei(k-1)) \right],$$

wobei mit Ki ein zweiter Vertärkungsfaktor, mit Ta eine Abtastzeit und mit Tv eine Vorhaltezeit bezeichnet ist.

**Claims**

**1.** Method for controlling a controlled system (5) with the following features:
a state variable (ni (k)) of the controlled system (5) is determined;

- the state variable (ni (k)) is compared with a desired variable (ns (k)) and the value of a manipulated variable (ui (k)) is determined from the difference (2);
- the value of the manipulated variable (ui (k)) is weighted by a correction value (ul (k)) (3), which is chosen depending on the state of variable (ni (k)) of the controlled system (5) in such a way that a weighting of the value of the manipulated variable (ui (k)) by the correction value (ul (k)) leads to a linear control behaviour of the controlled system (5);
- the weighted value of the manipulated variable (us (k)) is applied to the controlled system (5), characterised in that the comparison of the state variable with the desired variable and the determination of the value of the manipulated variable covers the following process steps:
- the state variable (ni (k)) is subtracted from the desired variable (ns (k)) and a first input value (eo (k)) is obtained;
- the first input value (eo (k)) is subjected to a proportional and integral control process (22) and an output value (uo (k)) is determined;
- the state variable (ni (k)) is subtracted from the output value (uo (k)) (23) and a second input value (ei (k)) is obtained, which is subjected to a proportional and differential control process (24) and the value of the manipulated variable (ui (k)) is calculated in this way.

**2.** Method in accordance with Claim 1, characterised in that the value of the manipulated variable (ui (k)) is multiplied by the correction value (ul (k)).

**3.** Method in accordance with Claim 1, characterised in that the state variable (ni (k)) is averaged over time (25) before it is subtracted from the desired variable (ns (k)).

**4.** Method in accordance with Claim 1, characterised in that a time-delayed desired variable is used as a desired variable.

**5.** Method in accordance with Claim 1, characterised in that the following function is used as a proportional and integral control process (22):

$$uo(k) = uo(k\text{-}1) + K0^* \left[ eo(k) - \left(1 - \frac{Ta}{Tn}\right) eo(k-1) \right],$$

whereby K0 is an amplification factor, Ta is an action period and Tn is an integral action time.

**6.** Method in accordance with Claim 1, characterised in that the following function is used as a proportional and differential control process (24):

$$ui(k) = Ki^* \left[ ei(k) - \frac{Tv}{Ta} (ei(k) - ei(k-1)) \right],$$

whereby Ki is a second amplification factor, Ta is an action period and Tv is a derivative action time.

**Revendications**

**1.** Procédé de régulation d'un système asservi (5) présentant les caractérisques suivantes :

- une variable d'état (ni(k)) du système asservi (5) est déterminée;
- la variable d'état (ni(k)) est comparée à une grandeur de consigne (ns(k)) et une valeur de commande (ui(k)) est déterminée d'après la différence (2);
- la valeur de commande (ui(k)) est pondérée par une valeur de correction (ul(k)) (3), qui est choisie en fonction de la variable d'état (ni(k)) du système asservi (5) de telle manière qu'une pondération de la valeur de commande (ui(k))) avec la valeur de correction (ul(k)) conduit à un comportement de régulation linéaire du système asservi (5);
- la valeur de commande pondérée (us(k)) est appliquée au système asservi (5),

caractérisé en ce que la comparaison de la variable d'état à la grandeur de consigne et la détermination de la valeur de commande comporte les opérations suivantes :

- la variable d'état (ni(k)) est soustraite de la grandeur de consigne (ns(k)) et on obtient une première valeur d'entrée (eo(k));
- la première valeur d'entrée (eo(k)) est soumise à un procédé de régulation proportionnelle et intégrale (22) et une grandeur de sortie (uo(k)) est déterminée;
- la variable d'état (ni(k)) est soustraite de la grandeur de sortie (uo(k)) (23) et une deuxième valeur d'entrée (ei(k)) est obtenue, qui est soumise à un processus de régulation proportinnelle et différentielle (24) et une valeur de commande (ui(k)) est calculée de cette manière.

**2.** Procédé selon la revendication 1, caractérisé en ce que la valeur de commande (ui(k)) est multipliée par la valeur de correction (ul(k)).

**3.** Procédé selon la revendication 1, caractérisé en ce que la variable d'état (ni(k)) est moyennée dans le temps (25), avant d'être soustraite de la grandeur de consigne (ns(k)).

**4.** Procédé selon la revendication 1, caractérisé en ce que, comme grandeur de consigne, on utilise une grandeur de consigne retardée dans le temps.

**5.** Procédé selon la revendication 1, caractérisé en ce que, comme processus de régulation proportionnelle et intégrale (22), on utilise la fonction suivante :

$$uo(k) = uo\text{-}k\text{-}1) - K0^* [eo(k)\text{-}(1- \frac{T_a}{T_n})eo(k\text{-}1)] ,$$

K0 étant un facteur d'amplification, Ta un temps d'échantillonnage et T, un temps de compensation.

**6.** Procédé selon la revendication 1, caractérisé en ce que, comme processus de régulation proportionnelle et différentielle (24), on utilise la focntion suivante :

$$ui(k) = Ki^* [ei(k)\text{-}(1\text{-}\frac{Tv}{Ta})ei\text{-}(k)\text{-}ei(k\text{-}1)],$$

Ki étant un deuxième facteur d'amplification, Ta un temps d'échantillonnage et Tv un temps de dérivation.

FIG 1

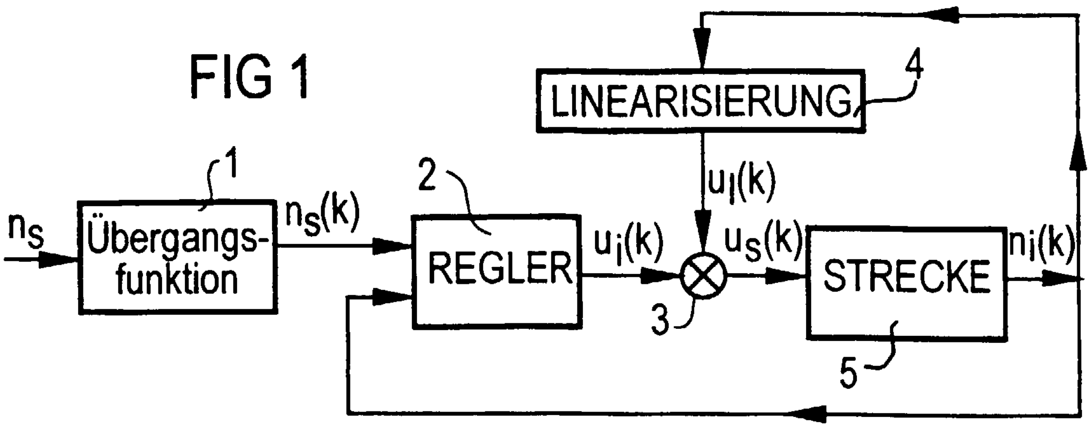


FIG 2

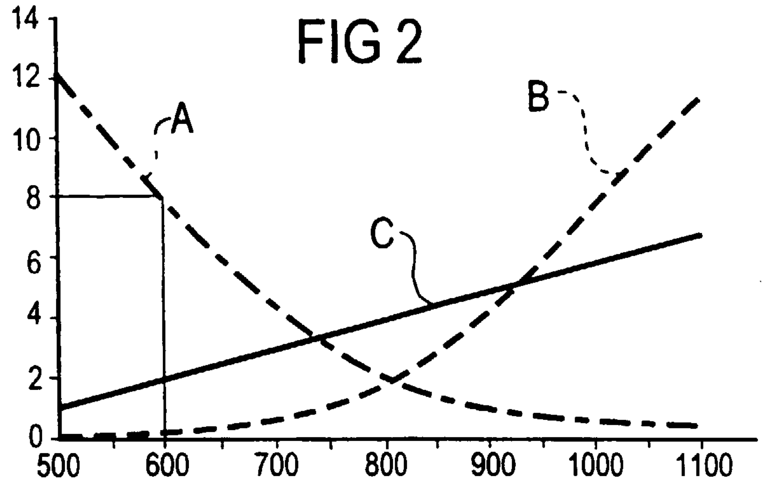


FIG 3